# EUROPEAN PATENT SPECIFICATION

(11) **EP 1 925 820 B1**
(45) Date of publication and mention of the grant of the patent: **03.11.2010**
(21) Application number: 06124664.1
(22) Date of filing: 23.11.2006
(51) Int. Cl.: F03D 11/00

(54) **Wind turbine main bearing**
Hauptlager einer Windkraftanlage
Palier principal d'une éolienne

(43) Date of publication of application: 28.05.2008
(73) Proprietor: STX Heavy Industries Co., Ltd., Changwon-si Gyeongsangnam-do 641-371 (KR)
(72) Inventor: de Vilder, Gerardus Johannes, 3434DP, Nieuwegein (NL)
(74) Representative: Caspary, Karsten

(56) References cited:
- WO-A-01/21956
- WO-A-02/057624
- WO-A-03/023943
- DE-A1- 4 402 184
- DE-A1- 10 351 524
- DE-A1-102004 028 746
- US-A1- 2006 152 014

## Description

The invention concerns a wind turbine in accordance with the preamble of claim 1. Such a wind turbine is known, e.g. from WO 02/057624. Breaking systems for wind turbines are as such known from any of DE-A-4402184 or WO 03/023943.

The disadvantage of the known device is that the ring of the main bearing that is attached to the housing has to be designed strong enough to support both tracks of this ring, which increases the costs of the main bearing.

In order to improve on this the wind turbine is in accordance with claim 1. In this way the two tracks of the first ring are both supported in a symmetric way by a stiffener, so that the first ring of the main bearing is properly supported for transmitting external rotor loads such as gravitational forces and aerodynamic forces that are generated by the rotor and the vanes.

This design makes it possible to have an effective and strong braking system for the rotor.

This way the brake disk also reinforces the second ring.

In accordance with an embodiment, the wind turbine is according to claim 2. By increasing the area moment of inertia in the specified way the first ring is sufficiently stiffened to increase the allowable load on the main bearing considerably.

In accordance with an embodiment, the wind turbine is according to claim 3. In this way the tracks on the second ring are better supported so that the deformations of both the first ring and the second ring are more reduced and the rotating elements are more evenly loaded, which reduces the stress on each rotating element and on the tracks.

In accordance with an embodiment, the wind turbine is according to claim 4. This way the rotor can be locked in a fixed rotative position in an easy way.

In accordance with an embodiment the wind turbine is according to claim 5. This makes a compact design possible.

The invention will be explained hereafter based on an embodiment with the use of a drawing. In the drawing
Figure 1 shows a schematic section of a wind turbine,
Figure 2 shows a section of the main bearing of the wind turbine of figure 1, and
Figure 3 shows a perspective view of the main bearing of the wind turbine of figure 1.

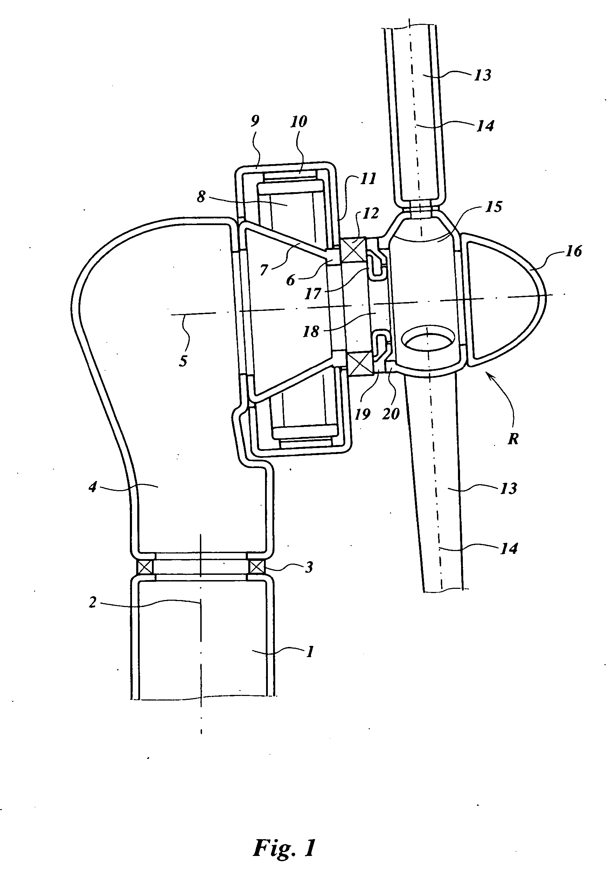

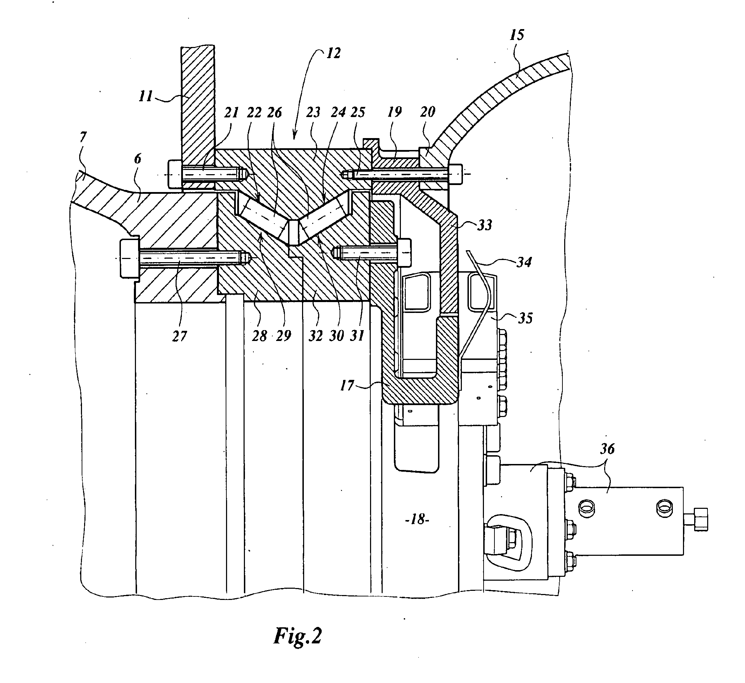

Figure 1 shows a wind turbine placed with a tower 1 on which a housing 4 is placed. The housing 4 can rotate around a vertical centreline 2 of a bearing 3 so that a rotor rotation axis 5 of a rotor R can be directed in a direction towards the wind. A conical housing ring 7 is connected to the housing 4 and a main bearing 12 of the rotor is fastened to the housing ring 7. The rotor R comprises a hub 15 with vanes 13 which can rotate around a vane centreline 14 and are connected to the hub 15. The central part of the hub 15 is covered by a cone 16. The hub 15 is connected with a hub flange 20 via a brake disk 19 to an outer bearing ring 23 (see figure 2) of the main bearing 12. On the same side of the main bearing 12 a brake ring 17 is connected to a second inner ring 32 (see figure 2) of the main bearing 12, which brake ring 17 has an opening 18 through which the inside of the hub 15 is accessible.

A stator 8 of a generator is fixedly mounted on the conical housing ring 7 and comprises the electrical windings of the stationary part of the generator. A generator ring 9 forms the rotating part of the generator and is clamped with a generator flange 11 to the outer bearing ring 23. The generator ring 9 rotates with the rotor R. The rotating generator ring 9 is provided with magnets 10 which move during rotation of the rotor R and the vanes 13 along the stator 8 and its electrical windings to generate electrical power.

The tower 1 has a height of more than 30 meters and the rotor with the vanes 13 has a diameter of more than 30 meters. The main bearing 12 has a large diameter, for instance an outer diameter of more than 2000 mm. Figure 2 shows the main bearing 12 in more detail. The main bearing 12 comprises a first inner ring 28 and a second inner ring 32 which are coupled in a known way to form an assembled inner ring 28, 32. The first inner ring 28 is connected with bolts 27 to a housing flange 6 and is stationary. The design of this connection is such that the load on the first inner ring 28 is directly transmitted to the housing flange 6 that is part of the conical housing ring 7.

The main bearing 12 has an outer bearing ring 23 which is at one side connected with bolts 21 to the generator flange 11 and at the other side with bolts 25 via the brake disk 19 to the hub flange 20 and the hub 15. The outer bearing ring 23 has a roller track 22 which is supported via rollers 26 by roller track 29 on the first inner ring 28 and also a roller track 24 which is supported via rollers 26 on roller track 30 of the second inner ring. The load on the main bearing 12 comprises mainly gravitational forces and aerodynamic forces generated by the rotating rotor R with the hub 15 and the vanes 13.

The load is transferred via the roller tracks 22 and 24, the rollers 26 and the roller tracks 29 and 30 to the housing flange 6 and the housing ring 7.

It has been found that the deformation of the roller tracks 22, 24, 29 and 30 by the rollers 26 determines the allowable load on the main bearing 12. This deformation depends to a large extend how the main bearing 12 is supported by its surroundings. In a wind turbine whereby the hub 15 of the rotor is directly coupled to the generator (direct drive, no gearbox), the main bearing 12 has a large diameter and is on the inside open so that the hub 15 and the vanes 13 can be accessed from the inside. The generator and the hub 15 are coupled to one or both sides of the outer ring 23 and the housing 4 is connected via the housing ring 7 to one side of the main bearing 12. It has been found that in this design generally one of the roller tracks 29, 30 of the inner rings 28, 32 is not supported in a sufficient stiff way so that undesired deformations occur which lead to high stresses on the roller tracks 22,24,29 and 30 and/or rollers 26.

In order to improve on this the main bearing 12 is on both sides of the assembled inner ring 28, 32 supported by a stiffener that adds at least 50% and preferably 100% to its area moment of inertia in the radial direction. On the one side of the inner ring 28, 32 the housing flange 6 acts as stiffener and directly supports the roller track 29. At the other side of the assembled inner ring 28, 32 the brake ring 17 acts as stiffener and directly supports the roller track 30. The brake ring 17 is coupled with bolts 31 to the second inner ring 32.

The outer ring 23 is reinforced on one side by the generator flange 11 which acts as stiffener and directly supports the roller track 22 and the brake disk 19 and/or the hub flange 20 act(s) as stiffener for the other side of the outer ring 23 and directly support(s) the roller track 24. The stiffeners on the four sides of the main bearing support the roller tracks 22, 24, 29 and 30 so that the deformations of the tracks are reduced and the play over the whole length of the roller 26 between the roller tracks 22 and 28 and the roller tracks 24 and 30 and the respective rollers 26 does not change under load. In this way the load capability and so the service life of the main bearing 12 is increased.

It will be clear to those skilled in the art that the described stiffener rings for preventing deformation of the tracks of a roller bearing can be applied to main bearings of various designs in which are there at least four tracks for the rollers. In the described embodiment, there are two rows of rollers 26 of conical shape whereby each row of conical rollers 26 rolls between two tracks. The invention is also applicable in the situations with different designs for the main bearing. An example of this is a roller bearing with three rows of cylindrical rollers that roll between six tracks. A further example is a roller bearing with one row of rollers in which the rollers roll between four tracks and are placed in turns crosswise. In all these designs, either the inner ring or the outer ring might be assembled from two rings in order to make assembling the roller bearing possible. For limiting the deformations of the tracks, both the inner ring and the outer ring will be supported on both sides.

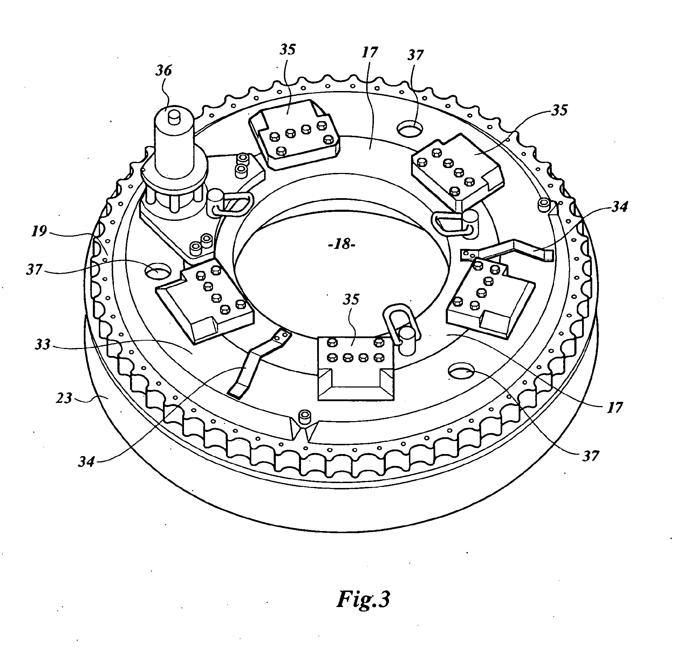

For stopping the rotation of the rotor with the vanes 13 the brake ring 17 is provided with brakes 35 which act on a brake surface 33 of the brake disk 19. For blocking the rotation of the rotor the brake surface 33 has lock pin holes 37 (see figure 3) in which a lock pin can be inserted by a lock pin activator 36.For transmitting the high tension generated by lightning from the rotor to the housing 4 the brake ring 17 is provided with lighting strips 34. Figure 3 shows these various parts in a perspective view.

## Claims

1. Wind turbine comprising a housing (4,7), a main bearing (12), a rotor (R) rotatable around a more or less horizontal axis (5) comprising vanes (13) mounted in a hub (15), which hub (15) is accessible through the main bearing, and a generator (9,10) whereby the main bearing has a first ring (28, 32) which is at a first side coupled to the housing and a second ring (23) connected to the hub and to rotating parts (9) of the generator and between the first ring and the second ring one or more rows of rotating elements (26) which rotating elements can roll between at least two tracks (29, 30) on the first ring and two tracks (22,24) on the second ring, wherein stiffeners support the tracks (29, 30) of the first and second ring, **characterized in that** said stiffeners comprise a brake ring (17) with one or more brake units (35) coupled to a second side of the first ring (28,32) and a brake disk (19,33) coupled to the second ring (23), which brake disk (33) is encompassed by the brake units (35).

2. Wind turbine according to claim 1 whereby the brake ring (17) is designed such that it increases the area moment of inertia of the first and/or second ring (28,32) in the radial direction with at least 50% and preferably with at least 100%.

3. Wind turbine according to claim 1 or 2 whereby the second ring (23) is at both sides coupled to second stiffeners by connecting it respectively to the hub (15,20) and to the rotating part (11) of the generator.

4. Wind turbine according to claim 4 1,2 or 3 whereby the brake ring (17) comprises a lock pin activator (36) for inserting a lock pin into a lock pin hole (37).

5. Wind turbine according to claim 4 whereby the brake disk (33) includes the lock pin holes (37).

## Patentansprüche

1. Windenergieanlage mit einem Gehäuse (4, 7), einem Hauptlager (12), einem Rotor (R), der um eine mehr oder weniger horizontale Achse (5) drehbar ist und der Flügel (13) aufweist, die an einer Nabe (15) angeordnet sind, wobei die Nabe (15) über das Hauptlager zugänglich ist, und mit einem Generator (9, 10), wobei das Hauptlager einen ersten Ring (28, 32), der an einer ersten Seite an das Gehäuse gekoppelt ist, und einen zweiten Ring (23), der mit der Nabe und den rotierenden Teilen (9) des Generators verbunden ist, und zwischen dem ersten Ring und dem zweiten Ring eine oder mehrere Reihen von rotierenden Elementen (26) aufweist, wobei die rotierenden Elemente zwischen mindestens zwei Bahnen (29, 30) auf dem ersten Ring und zwei Bahnen (22, 24) auf dem zweiten Ring laufen können, wobei Versteifungselemente die Bahnen (29, 30) des ersten und zweiten Rings stützen,
**dadurch gekennzeichnet, dass**
die Versteifungselemente einen Bremsring (17) mit einer oder mehreren Bremseinheiten (35), die an eine zweite Seite des ersten Rings (28, 32) gekoppelt sind, und eine Bremsscheibe (19, 33) aufweisen, die an den zweiten Ring (23) gekoppelt ist, wobei die Bremsscheibe (33) von den Bremseinheiten (35) umfasst ist.

2. Windenergieanlage nach Anspruch 1, wobei der Bremsring (17) eingerichtet ist, dass er das Flächenträgheitsmoment des ersten und/oder zweiten Rings (28, 32) in radialer Richtung mindestens um 50 % und vorzugsweise um mindestens 100 % erhöht.

3. Windenergieanlage nach Anspruch 1 oder 2, wobei der zweite Ring (23) an beiden Seiten an zweite Versteifungselemente gekoppelt ist, indem er entsprechend mit der Nabe (15, 20) und dem rotierenden Teil (11) des Generators verbunden wird.

4. Windenergieanlage nach Anspruch 1, 2 oder 3, wobei der Bremsring (17) eine Aktivierungseinrichtung (36) mit Arretierstift zum Einführen eines Arretierstifts in ein Arretierstiftloch (37) aufweist.

5. Windenergieanlage nach Anspruch 4, wobei die Bremsscheibe (33) die Arretierstiftlöcher (37) umfasst.

## Revendications

1. Turbine éolienne comprenant un carter (4, 7), un palier principal (12), un rotor (R) pouvant tourner autour d'un axe plus ou moins horizontal (5) comprenant des aubes (13) montées dans un moyeu (15), lequel moyeu (15) est accessible par le palier principal, et un générateur (9, 10) de sorte que le palier principal a une première bague (28, 32) qui est couplée d'un premier côté au carter et une seconde bague (23) reliée au moyeu et à des parties rotatives (9) du générateur, et entre la première bague et la seconde bague une ou plusieurs rangées d'éléments rotatifs (26), lesquels éléments rotatifs peuvent rouler entre au moins deux pistes (29, 30) sur la première bague et deux pistes (22, 24) sur la seconde bague, dans laquelle des raidisseurs supportent les pistes (29, 30) des première et seconde bagues, **caractérisée en ce que** lesdits raidisseurs comprennent une bague de frein (17) munie d'une ou plusieurs unités de frein (35) couplées à un second côté de la première bague (28, 32) et un disque de frein (19, 33) couplé à la seconde bague (23), lequel disque de frein (33) est entouré par les unités de frein (35).

2. Turbine éolienne selon la revendication 1, dans laquelle la bague de frein (17) est conçue de sorte qu'elle augmente le moment d'inertie de la surface de la première et/ou seconde bague (28, 32) dans la direction radiale d'au moins 50 % et de préférence d'au moins 100 %.

3. Turbine éolienne selon la revendication 1 ou 2, dans laquelle la seconde bague (23) est couplée des deux côtés à des seconds raidisseurs en la reliant respectivement au moyeu (15, 20) et à la partie rotative (11) du générateur.

4. Turbine éolienne selon la revendication 1, 2 ou 3, dans laquelle la bague de frein (17) comprend un activateur de goupille de blocage (36) pour insérer une goupille de blocage dans un trou de goupille de blocage (37).

5. Turbine éolienne selon la revendication 4, dans laquelle le disque de frein (33) comprend les trous de goupille de blocage (37).
